**Europäisches Patentamt**

**European Patent Office**

**Office européen des brevets**

(11) Numéro de publication: **0 152 707**
**B1**

(12) **FASCICULE DE BREVET EUROPEEN**

(45) Date de publication du fascicule du brevet: **19.09.90**

(51) Int. Cl.⁵: $A\ 21\ C\ 13/00$

(21) Numéro de dépôt: **84401143.7**

(22) Date de dépôt: **05.06.84**

(54) Chambre de fermentation pour la fabrication de pizza.

(30) Priorité: **21.02.84 FR 8402578**

(43) Date de publication de la demande:
**28.08.85 Bulletin 85/35**

(45) Mention de la délivrance du brevet:
**19.09.90 Bulletin 90/38**

(84) Etats contractants désignés:
**AT BE CH DE FR GB IT LI LU NL SE**

(56) Documents cités:
**FR-A- 84 863**
**FR-A-2 262 913**
**FR-A-2 398 461**
**LU-A- 59 512**
**US-A-3 879 564**

(73) Titulaire: **Dalla Vaniglia, Guiseppe**
**73 Boulevard Soult**
**F-75012 Paris (FR)**

(72) Inventeur: **Dalla Vaniglia, Guiseppe**
**73 Boulevard Soult**
**F-75012 Paris (FR)**

(74) Mandataire: **Kügele, Bernhard et al**
**NOVAPAT-CABINET CHEREAU 63 bis, boulevard**
**Bessiéres**
**F-75017 Paris (FR)**

Courier Press, Leamington Spa, England.

## Description

La présente invention concerne une chambre de fermentation pour la fabrication des pizzas, formant une enceinte à double paroi pourvue en son milieu d'une isolation thermique munie d'une porte et d'une enceinte interne hermétiquement close, autour de laquelle circule dans un couloir entre les deux enceintes un courant d'air entraîné par un système de ventilation.

On connaît des chambres de fermentation, par exemple par le brevet américain No. 3.479.971.

Cette chambre de congélation et de fermentation permet de placer de la pâte dans la chambre de la congeler et après un certain temps de conservation, de la décongeler en faisant circuler de la vapeur d'eau puis ensuite de faire lever cette pâte. Ce type d'appareil et de méthode est particulièrement bien adapté dans le cas où l'on souhaite conserver de grandes quantités de pâte pour la pâtisserie ou le pain, mais ne convient nullement dans le cas où l'on cherche à conserver et à faire lever des pizzas qui sont constituées, comme on le sait, par de minces couches de pâte, disposées sur les plaques support. D'autre part, dans la constitution de la pâte à pain, la quantité de levure intervenant dans l'épaisseur étant dix fois plus importante que celle intervenant dans la constitution de la pâte à pizza, la pâte à pain pourra supporter plus aisément une congélation suivie d'une fermentation alors que, la pâte à pizza ne pourra pas supporter une congélation préalable à la fermentation sans que les ferments soient détruits. Enfin, dans l'appareil permettant la congélation et la fermentation de la pâte à pain, ces opérations sont assurées par une circulation d'air autour de la pâte, ce qui provoque des modifications de la surface (croûte) et de l'état de surface de la pâte au cours de sa conservation ou de sa fermentation. Par la suite, il est nécessaire de réhumidifer la croûte pour que celle-ci disparaisse.

On connaît également le brevet français FR—A—84863 qui prévoit une chambre avec double circulation d'air l'une interne, l'autre externe à l'intérieur d'une double paroi. Ainsi les deux atmosphères peuvent avoir un degré hygrométrique différent. L'air externe peut être remplacé par un fluide et une tuyauterie associée. Un tel dispositif présente l'inconvénient majeur d'avoir un volume d'air interne important et renouvelé ce qui conduit à la dessiccation des pâtons, aussi pour éviter ce croûtage l'invention prévoit des déflecteurs qui rendent encore plus complexe une installation déjà lourde puisque possédant une double circulation.

Le brevet LU-59512 décrit une armoire de fermentation utilisée pour la boulangerie et comportant une pluralité d'étagères dans une enceinte de façon à ce qu'un courant d'air généré par un ventilateur puisse circuler entre les étagères tout en étant en contact avec la pâte déposée sur ces étagères.

Le but de la présente invention est de prévoir une chambre de fermentation dans laquelle l'air peut circuler de façon à élever la température pour favoriser la fermentation, tout en évitant que l'air circulant rentre en contact avec le contenu des pâtes ou autres matériaux à fermenter, évitant ainsi un effet de dessiccation superficiel de ce dernier.

Selon l'invention le premier but est atteint par le fait, que l'enceinte interne est constituée des enceintes individuelles et étanches empilées les unes sur les autres pour définir une pluralité d'enceintes étanches, adaptées pour contenir des pizzas dans un faible volume d'air statique.

D'autres caractéristiques et avantages de la présente invention apparaîtront plus clairement à la lecture de la description qui suit, faite en référence aux dessins annexés dans lesquels:
—La figure 1 représente en ensemble de matériel permettant la mise en oeuvre du procédé de fabrication de pizza;
—La figure 3 représente une vue de devant de la chambre de fermentation;
—La figure 4 représente une vue de dessus en coupe de la chambre de fermentation associée à une chambre de conservation.

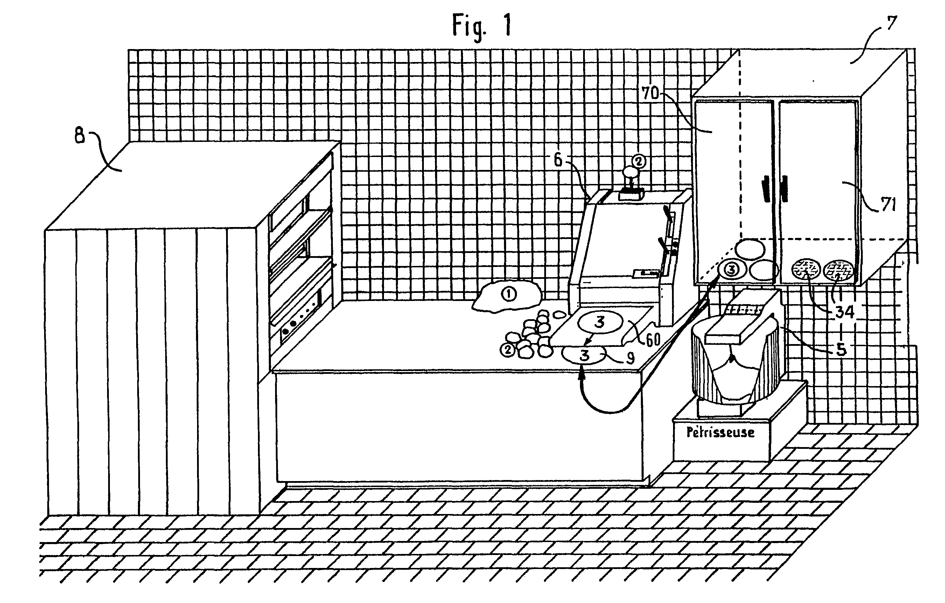

La figure 1 représente les différentes étapes du procédé de fabrication de pizza. Une pétrisseuse 5 permet de fabriquer, à partir des ingrédients usuels de la pâte à pizza, une certaine masse de pâte pétrie 1 que l'on divise en boule de quantité égale 2, ces boules de quantité égale 2 étant introduites dans une machine à former les pizzas 6 qui délivre sur son tapis roulant 60 des disques de pâte 3 que l'on dispose sur des poêlons 9. Ces poêlons 9 munis de leur pâte 3, non fermentée, sont introduits dans une armaire de fermentation 7, qui, dans l'exemple figuré comporte deux chambres, une chambre de fermentation et une deuxième chamber dans lequel on met les poêlons munis des pâtes fermentées 34, ces poêlons étant préalablement revêtes d'un garniture de façon à ce que la pizza soit prête à être introduite dans le four de cuisson 8.

Les opérations de pétrissage, de division de la pâte en portions et d'étirage des portions en disques de pâte 3 ou en portions rectangulairs peuvent être réalisées par des machines automatiques ou semi-automatiques connues.

Ainsi, le procédé de fabrication des pizzas est pratiquement continu jusqu'à l'opération de fermentation et s'effectue en une seule phase. Ensuite, le cuisinier intervient une deuxième fois, une fois la fermentation terminée pour préparer préalablement une certain quantité de pizzas fermentés avec les garnitures figurant à la carte et les remettre dans le compartiment de conservation 71.

Au moment où la pâte à pizza a été suffisamment levée et où le cuisinier les sort de la chambre de fermentation, celui-ci avant d'étaler la garniture écrase légèrement le centre de la pâte levére de façon à repousser les alvéoles de la pâte levée vers l'extérieur et à provoquer un léger creux central qui permettre d'avoir un bord automatiquement et à la garniture de rester au centre de la pizza sans déborder vers l'extérieur.

Au moment du coup de feu, le cuisinier n'a plus qu'à prendre les poëlons préparés et les introduire dans le four au fur et à mesure de la commande des clients.

On comprend donc que le procédé présente l'avantage énorme de minimiser les manipulations nécessaires à la préparation des pizzas et de simplifier au maximum celle-ci de façon à pouvoir faire appel à un personnel le moins qualifié possible. D'autre part, comme les disques de pâte 3 sont directement amenés sur les poëlons 9, il n'est pas nécessaire de saupoudrer les disques de pâte de farine, ce qui présentait l'inconvénient de dessécher la surface de la pâte et de créer artificiellement une croûte qui prenait le goût de brûlé à la cuisson.

L'armoire de fermentation 7 est une chambre spécialement adaptée comportant une chambre de fermentation 70 dans lequel les pizzas sont disposées de façon à occuper le volume maximum et à laisser un minimum d'air statique dans cette chambre. Par ailleurs, la chambre de fermentation 70 est également associée avec une chambre 71 de conservation qui permet de garder les pâtes fermentées et éventuellement garnies.

La fermentation et la conservation des pâtes est possible sans modifier les caractéristiques externes de la pâte, ni la dessécher puisque le matériel utilisé est prévu pour éviter toute circulation d'air autour du disque de pâte préparée. Cette armoire de fermentation 7, est pourvue autour d'une enceinte de fermentation interne à la chambre de fermentation et d'une enceinte de conservation 71 interne à la chambre de conservation, de couloirs de circulation d'air dont les températures peuvent être réglées indépendamment par un système de régulation de température non représenté.

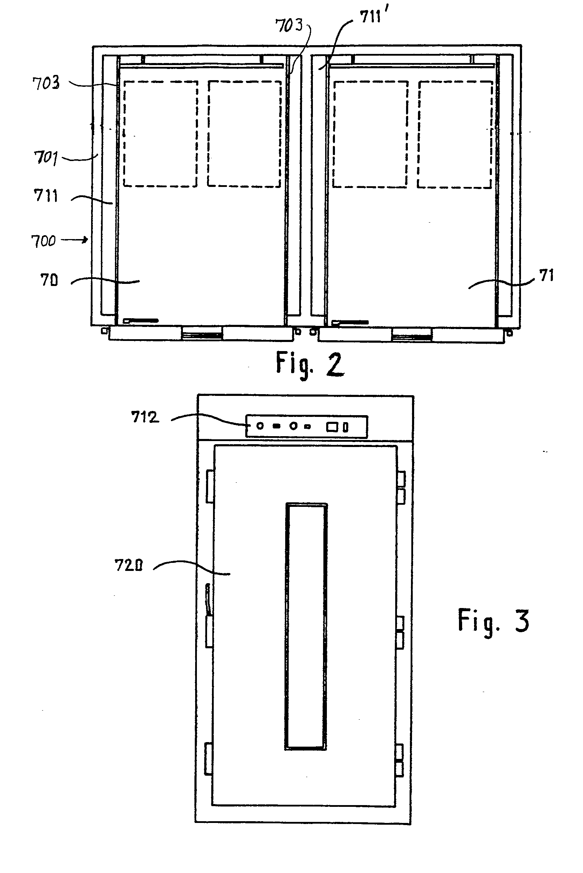

Les figures 2 et 3 représentent un mode de réalisation d'une chambre de fermentation et de conservation. Cette chambre de fermentation ou de conservation 70, 71 comprend une enceinte en inox 700 à double paroi pourvue en son milieu d'une isolation 701 en polyuréthane. Cette enceinte isolée en inox 700 est pourvue d'orifices de prise d'air pour renouveler l'air. L'enceinte isolée 700 est fermée sur sa partie avant par une porte 720, visible sur la figure 3. A l'intérieur de cette enceinte à double paroi 700 se trouve une deuxième enceinte 703 de dimension plus petite que la première enceinte 700 de façon à constituer entre les deux enceintes 700, 703 un couloir de circulation d'air 711. La circulation d'air est produite par un ventilateur. L'air qui circule passe sur un ensemble de résistances et un évaporateur qui permet de réchauffer ou de refroidir l'air, suivant que l'on ou l'autre des deux systèmes est en fonctionnement. L'évaporateur, est alimenté par un groupe frigorifique. Un thermostat permit de réguler la température à l'intérieur de l'enceinte interne 703. Une lumière permet d'éclairer l'enceinte au moment de l'ouverture de la porte 720.

Un tableau de commande 712 comporte de façon connue en soi un bouton de réglage de la température de l'air cigculant dans le couloir 711, un bouton de commande de la vitesse du ventilateur et un timer permettant de régler d'une part la durée de la circulation d'air et de programmer également les heures de mise en route ou d'arrêt de la chambre de fermentation et/ou de la chambre de conservation.

La figure 2 représente une vue de dessus en coupe de l'armoire de fermentation et de conservation représentée sur la figure 1. Dans cette chambre on peut voir les couloirs de circulation d'air 711 et 711' dans lesquels circule de l'air à des températures différentes de façon à permettre dans la chambre 70 la fermentation des pâtes et dans la chambre 71 la conservation.

Pour effectuer la fermentation on met la température de l'air à 40° pendant deux heures alors que pour effectuer la conservation on mettra par exemple l'air à 2° pendant tout le temps souhaité.

En maintenant ainsi les pâtes à fermenter dans une enceinte contenant de l'air statique en faible quantite, ce volume d'air étant compris entre 10 et 30% et de préférence ne dépassant pas 20%, on évite la dessiccation superficielle de la pâte et on favorise sa fermentation puisque l'enceinte va monter en température en fonction du courant d'air qui circule à son extérieur.

La chambre étant pourvue de moyens de réfrigération permet dont la conservation des pâtes fermentées, mais aussi de ralentir la fermentation pour par exemple pouvoir préparer bien à l'avance la pâte à pizza. De même, la chambre permettant un réchauffement de l'air, on pourra accélérer au besoin la fermentation de la pâte si l'on se trouve pris de court.

La présente invention permet donc de réduire au minimum les manipulations nécessaires pour faire des pizzas de qualité traditionnelle, équivalente à celle des pizzas que préparaient de façon domestique les ménagères, tout en permettant une fabrication adaptée à l'industrie ou à l'utilisation dans des restaurants ayant un grand débit.

Des exemples de l'enceinte interne peuvent être envisagées: ainsi on pourrait prevoir une succession de caisses dans lesquelles on disposerait les plaques munies de leurs pizzas, ces caisses étant conformés avec des bords tels que ceux-ci s'emboîteraient dans le fond de la caisse disposée au-dessus de façon étanche. Ainsi, en disposant une pluralité de caisses on obtiendrait un nombre d'enceintes hermétiquement closes comprenent les caisses empilées les unes sur les autres.

De la même façon, on pourrait envisager de modifier des plaques support 9 qui permettent l'introduction de la pizza directement dans le four et de donner à ces plaques des bords latéraux conformés de façon à ces que les bords latéraux de la plaque inférieure s'emboîtent dans le fond d'une plaque supérieure 9 et que l'on puisse ainsi constituer un empilage de plaques formant des enceintes internes hermétiquement closes.

Par ailleurs il est également possible de supprimer les moyens de chauffage, de refroidissement et de circulation de l'air autour de l'enceinte interne 703. En effet, dans le cas où l'appareil est placé dans un local dont la température est suffisante pour amener l'enceinte interne 703 à une température telle que la fermentation des pizzas est assurée dans un laps de temps convenant à l'utilisateur, il s'avère trop onéreux de pourvoir le dispositif des moyens, permettant d'accélérer ou de ralentir la fermentation, indépendamment de la température ambiante.

Enfin, on peut également remplacer les moyens de réchauffement ou de refroidissement opératif par convection par des moyens opérant par conduction, c'est-à-dire par exemple des résistances chauffantes, directement en contact avec l'enceinte interne 703 et un système de refroidissement également en contact avec les parois de l'enceinte interne et réparti tout autour ou tout au moins sur une surface suffisante pour assurer la transmission du froid ou de la chaleur par conduction.

## Revendications

1. Chambre de fermentation pour la fabrication des pizzas, formant une enceinte (700) à double paroi pourvue en son milieu d'une isolation (701) thermique munie d'une porte (720) et d'une enceinte interne (703) hermétiquement close, autour de laquelle circule dans un couloir (711) entre les deux enceintes (700, 703) un courant d'air entraîné par un système de ventilation, caractérisée en ce que l'enceinte interne (703) est constituée d'enceintes individuelles et étanches, empilées les unes sur les autres et adaptées pour contenir des pizzas dans un faible volume d'air statique.

2. Chambre de fermentation selon la revendication 1, caractérisée en ce que les enceintes individuelles et étanches sont constituées par des caisses empilables les unes sur les autres, et dont les formes supérieures et inférieures se complètent de façon étanche.

3. Chambre selon la revendication 1, caractérisée en ce que les enceintes individuelles et étanches sont constituées par la superposition d'une pluralité de plaques support à pizzas (9) comportant des bords latéraux conformés de façon à s'emboîter de façon étanche avec le fond de la plaque supérieure.

4. Chambre selon l'une quelconque des revendications précèdentes, caractérisée en ce qu'elle comprend une pluralité d'enceintes internes et des moyens permettant de créer autour de chacune d'elles une circulation d'air indépendante et réglable en température indépendamment de façon à créer au moins une chambre de fermentation (70) et au moins une chambre de conservation (71).

5. Chambre selon l'une quelconque des revendications précèdentes, caractérisée en ce que la dimension des enceintes individuelles et étanches est telle qu'elle laisse un volume d'air statique de 10 et 30% du volume de l'enceinte lorsque celle-ci est remplie par une pizza.

6. Chambre selon la revendication 5, caractérisée en ce que le volume d'air statique restant disponible est de 20%.

## Patentansprüche

1. Gärschränk zur Herstellung von Pizzen, bestehend aus einem doppelwandigen, innen mit einer thermischen Isolierung (701) versehenen Gehäuse, das eine Tür (720) und ein hermetisch verschlossenes Innengehäuse (703) aufweist, um das in einem Kanal (711) zwischen den beiden Gehäusen (700, 703) ein von einem Ventilationssystem angetriebener Luftstrom zirkuliert, dadurch gekennzeichnet, daß das Innengehäuse (703) aus einzelnen, dichten Gehäuse besteht, die übereinandergestapelt und zur Aufnahme von Pizzen in einem geringen Volumen statischer Luft ausgebildet sind.

2. Gärschrank nach Anspruch 1, dadurch gekennzeichnet, daß die einzelnen, dichten Gehäuse aus übereinanderstapelbaren Kästen bestehen, deren obere und untere Formen einander abdichtend ergänzen.

3. Gärschrank nach Anspruch 1, dadurch gekennzeichnet, daß die einzelnen dichten Gehäuse durch Übereinanderstapeln mehrerer Pizzatragplatten (9) gebildet sind, die Seitenränder haben, die so ausgebildet sind, daß sie mit dem Boden der oberen Platte abdichtend zusammenpassen.

4. Gärschrank nach einem der vorhergehenden Ansprüche, gekennzeichnet durch mehrere Innengehäuse und Einrichtungen, die er ermöglichen, um jedes eine unabhängige Luftzirkulation zu erzeugen, deren temperatur unabhängig regulierbar ist, um wenigstens eine Gärkammer (70) und wenigstens eine Konservierungskammer (71) zu schaffen.

5. Gärschrank nach einem der vorhergehenden Ansprüche, dadurch gekennzeichnet, daß die Abmessung der einzelnen dichten Gehäuse derart ist, daß ein statisches Luftvolumen von 10 bis 30% des Gehäuse volumens verbleibt, wenn es einer Pizza gefüllt ist.

6. Gärschrank nach einem der vorhergehenden Ansprüche, dadurch gekennzeichnet, daß das verfügbare statische Restvolumen 20% beträgt.

## Claims

1. A fermentation chamber for pizza making, formed of an enclosure (700) having two walls equipped in the middle thereof with a thermal insulation (701), provided with a door (720) and an internal sealed enclosure (703), around which flows through a passage (711) between both enclosures (700, 703) an air stream due to a ventilating system, characterized in that said internal enclosure (703) includes individual and sealed enclosures, piled one against the other and adapted to contain pizzas within a low static air volume.

2. The fermentation chamber of claim 1, characterized in that said individual and sealed enclosures comprise boxes which can be piled one against the other, and the upper and lower shapes of which are sealingly complementary to one another.

3. The chamber of claim 1, characterized in that said individual and sealed enclosures comprise superposing a plurality of pizza support plates (9) including side edges conformed so as to sealingly engage the bottom of the upper plate.

4. The chamber of any preceding claim, characterized in that it includes a plurality of internal enclosures and means for creating around each of them an independent and independently adjustable temperature air stream with a view to creating at least a fermenting chamber (70) and at least a preservation chamber (71).

5. The chamber of any preceding claim, characterized in that the dimension of said individual and sealed enclosures is such that it leaves a static air volume of 10% and 30% of the enclosure volume when it is filled with a pizza.

6. The chamber of claims 5, characterized in that the static air volume remaining available is 20%.

Fig. 1

Pêtrisseuse

Fig. 2

Fig. 3